# EUROPÄISCHE PATENTSCHRIFT

(11) **EP 2 786 945 B1**
(45) Veröffentlichungstag und Bekanntmachung des Hinweises auf die Patenterteilung: **25.07.2018**
(21) Anmeldenummer: 14160427.2
(22) Anmeldetag: 23.09.2013
(51) Int. Cl.: B65D 85/06

(54) **Mehrwegverpackung**
Reusable package
Emballage multi-usages

(30) Priorität: 02.10.2012 DE 102012218055
(43) Veröffentlichungstag der Anmeldung: 08.10.2014
(62) Teilanmeldung aus: 13185601.5
(73) Patentinhaber: TyrePack GmbH & Co. KG, 44263 Dortmund (DE)
(72) Erfinder: KESTING, Ralph, 58239 Schwerte-Villingst (DE)
(74) Vertreter: dompatent von Kreisler Selting Werner - Partnerschaft von Patent- und Rechtsanwälten mbB

(56) Entgegenhaltungen:
- EP-A1- 0 058 003
- US-A- 1 583 659
- US-A- 4 145 974
- US-A1- 2007 280 568
- US-A1- 2010 147 015
- US-A1- 2012 097 672

## Beschreibung

Die Erfindung betrifft eine Mehrwegverpackung insbesondere zum Transport von Reifen, Felgen, Kompletträdern und dergleichen.

Der Transport von Reifen, Rädern oder Felgen erfolgt beispielsweise in Gitterboxen, wobei die Auslieferung an Werkstätten, Autohäuser und dergleichen üblicherweise unmittelbar von Herstellern oder Großhändlern durch LKWs erfolgt. Insbesondere auf Grund der Vielzahl unterschiedlicher Reifentypen und Reifengrößen ist ein Versenden einzelner Reifen oder Reifensätze, beispielsweise über Paketdienste wünschenswert. Hierzu fehlen jedoch geeignete Verpackungen.

Aus US 1,355,042 ist es bekannt, einen Stapel von Reifen zum Transport durch ein rundes Bodenelement und ein rundes Deckelelement und mit Hilfe von Riemen zu verspannen. Eine derartige Verpackung ist jedoch für den Transport von Reifen und dergleichen durch Paketdienste nicht geeignet. Der Versand von Gütern über Paketdienste erfolgt derart, dass in automatischen Sortieranlagen die Pakete sortiert werden. Diese Anlagen weisen unter anderem Förderbänder, Rutschen und dergleichen auf. Bei der in US 1,355,042 beschriebenen Verpackung handelt es sich lediglich um verbundene Reifen. Diese können weiterhin rollen. Dies stellt ein erhebliches Gefahrenpotenzial in Sortieranlagen von Paketen dar. Des Weiteren kann Abrieb der Reifen die Transportbänder, sowie auch andere Teile der Sortieranlage beschädigen. Insofern ist auch die Auslieferung von Reifen über Paketdienste in Kartonagen, Folienverpackungen und dergleichen nachteilig, da Verpackungen bei runden Formen weiterhin rollen können. Auch ist die Verwendung von Einwegverpackungen, insbesondere aus Kostengründen, nachteilig. Des Weiteren besteht generell der Nachteil, dass instabile große Reifenbündel von automatischen Sortieranlagen nicht gefördert werden können und ferner Personen beim Laden und Entladen sowie beim Zustellen ein äußerst unhandliches und schweres Paket handhaben müssen.

Des Weiteren sind bspw. aus DE 20 2012 101 284, EP 0 058 003 und US 5097951 Palettenverpackungen bekannt. Hierbei handelt es sich um eine Palette aufweisende Verpackungen oder um auf einer Palette angeordnete Verpackungen. Derartige Verpackungen sind ebenfalls nicht für den Versand von Transportgütern wie Reifen und dergleichen durch Paketdienste geeignet, da sowohl die Abmessungen und Gewichte je Packstück zu groß sind als auch stets eine aufrechte Position während des gesamten Versands notwendig ist, was beim Versand durch Paketdienste keinesfalls gegeben ist.

Aufgabe der Erfindung ist es, eine Mehrwegverpackung zu schaffen, die insbesondere zum Transport von Reifen, Felgen/Rädern und dergleichen insbesondere mit Paketdiensten geeignet ist.

Die Lösung der Aufgabe erfolgt erfindungsgemäß durch die Merkmale des Anspruchs 1. Die erfindungsgemäße Mehrwegverpackung weist ein Bodenelement und ein Deckelelement auf. Bei diesen beispielsweise aus Kunststoff, Pappe oder Verbundwerkstoffen hergestellten Elementen handelt es sich insbesondere um flache ebene Elemente. Zwischen dem Bodenelement und dem Deckelelement wird das Transportgut, wie beispielsweise ein Reifen, eine Felge, ein Komplettrad oder dergleichen, angeordnet. Das Bodenelement ist mit dem Deckelelement über mindestens ein Befestigungselement wie einen Riemen verbindbar, sodass das Transportgut zwischen dem Deckelelement und dem Bodenelement, insbesondere durch Einklemmen, gehalten ist. Anstelle von Riemen können selbstverständlich auch Gurte, Ketten, Seile, Federn, Netze und dergleichen verwendet werden. Die Befestigungselemente dienen zum Fixieren des Transportguts zwischen bzw. mit dem Bodenelement und dem Deckelelement. Des Weiteren weist die erfindungsgemäße Mehrwegverpackung, die für Transportdienste geeignet ist, mindestens eine Seitenwand auf. Die Seitenwand umgibt das Transportgut insbesondere vollständig. Hierbei kann es sich bspw. um eine ringförmige Seitenwand aber auch um eine aus mehreren geraden Elementen zusammengesetzte Seitenwand handeln. Insbesondere sind vier einzelne ggf. miteinander verbundene Seitenwände vorgesehen, so dass eine im Wesentlichen quaderförmige Mehrwegverpackung ausgebildet ist. Erfindungsgemäß ist das Transportgut somit insbesondere allseitig von der Verpackung umschlossen. Einen wesentlichen Aspekt der Erfindung stellt das Anordnen der Befestigungselemente dar, die vorzugsweise insbesondere vollständig innerhalb der Mehrwegverpackung angeordnet sind. Gegenüber außenliegenden Riemen und dergleichen hat dies den Vorteil, dass die erfindungsgemäße Mehrwegverpackung beim Transport auf Transportbändern und dergleichen nicht hängen bleibt. Mit Riemen, Schüren, Bändern und dergleichen an der Außenseite versehene Verpackungen werden von Paketdiensten üblicherweise nicht akzeptiert.

Vorzugsweise sind das Bodenelement und das Deckelelement im Wesentlichen rechteckig, insbesondere im Wesentlichen quadratisch ausgestaltet. Durch eine rechteckige insbesondere quadratische Ausgestaltung des Boden- und des Deckelelements ist eine quaderförmige Mehrwegverpackung ausgebildet. Eine derartige Verpackung eignet sich zum Versand mit Paketdiensten. Insbesondere ist es durch eine derartige Ausgestaltung der Verpackung möglich, diese durch automatische Sortieranlagen zu sortieren. Beispielsweise ein ungewolltes Rollen der Verpackung auf einem Transportband, einer Rutsche oder dergleichen und die hiermit verbundenen Gefahren sind vermieden. Des Weiteren ist durch die rechteckige insbesondere quadratische Ausgestaltung der Boden- und Deckelelemente vorzugsweise ein gewisser Überstand zu dem transportieren Gut wie einem Reifen oder dergleichen realisiert, sodass ein Beschädigen von Transportbändern oder anderen Elementen der Sortieranlage durch Reifenabrieb vermieden ist. Durch das Vorsehen von Riemen oder anderen Befestigungselementen, die das Bodenelement mit dem Deckelelement verbinden, wird die Stabilität der Verpackung hergestellt. Hierbei wird das transportierte Gut, wie beispielsweise ein Reifen, eine Felge oder dergleichen, zur Stabilisierung genutzt. Dies hat den erheblichen Vorteil, dass die Stabilität nicht durch den Kunststoff, die Pappe oder die Kartonage selbst realisiert werden muss. Hierdurch können insbesondere die Kosten sowie auch das Gewicht der Verpackung reduziert werden. Beim Transport oder der Lagerung wird somit zumindest ein Teil der auftretenden Kräfte durch das Transportgut selbst, wie beispielsweise den Reifen, aufgenommen. Gegebenenfalls kann eine Umverpackung des Transportguts oder ein Füllstoff vorgesehen sein, der sodann ebenfalls einen Teil der Kräfte aufnimmt.

Bevorzugt ist es, dass die Mehrwegverpackung zwischen dem Bodenelement und dem Deckelelement vier Seitenwände aufweist. Der hierdurch ausgebildete Transportbehälter umschließt das Gut, sodass die Gefahr des Auftretens von Abrieb und dergleichen und ein hierdurch hervorgerufenes Beschädigen von Sortieranlagen vermieden ist. Das Vorsehen einer geschlossenen Verpackung hat ferner den Vorteil, dass unangenehme Gerüche vermieden werden. Auch gegebenenfalls bestehende Hygienevorschriften können aufgrund einer geschlossenen Verpackung eingehalten werden.

Des Weiteren sind erfindungsgemäss die Seitenwände der Mehrwegverpackung in ihrer Höhe veränderbar. Hierdurch ist es möglich, eine leere Verpackung zusammen zu drücken, sodass die Höhe der Verpackung verringert ist und das Bodenelement zu dem Deckelelement somit einen geringeren Abstand aufweist. Dies hat den Vorteil, dass eine leere Verpackung weniger Stauraum in Anspruch nimmt und somit kostengünstig beispielsweise an den Versender des Transportguts zurückgesandt werden kann. Zur Veränderung der Höhe der Seitenwände können diese lamellenartig ausgebildet sein, sodass mehrere parallel zu dem Boden- und dem Deckelelement verlaufende Lamellen ineinander oder hintereinander geschoben werden können um die Höhe des Transportbehälters zu verringern. Bevorzugt ist es, dass die Seitenwände als Faltenbalg ausgebildet sind. Dies hat den Vorteil gegenüber Lamellen, dass ein Verhaken einzelner Lamellen vermieden ist. Zur Verringerung der Höhe wäre es auch möglich, eine einfache Plastikplane oder -folie als Seitenwände vorzusehen, die sodann zusammengedrückt wird. Bevorzugt ist hierbei das Vorsehen einer permanenten Knickfalte, einer umlaufenden Schweißnaht, einer Sicke als Sollknickstelle und dergleichen.

Zur Verringerung der Außenmaße einer leeren erfindungsgemäßen Mehrwegverpackung ist es ferner erfindungsgemäß bevorzugt, dass die insbesondere im Inneren der Verpackung angeordneten Befestigungselemente für das Transportgut flexibel ausgebildet sind. Insbesondere handelt es sich um mit dem Bodenelement und dem Deckelelement verbundene Riemen, Gurte, Netze oder dergleichen.

Vorzugsweise ist eine der Seitenwände öffenbar um das Transportgut herausnehmen zu können. Dies hat den Vorteil, dass das Bodenelement und das Deckelelement nicht voneinander getrennt werden müssen. Hierdurch ist es möglich das Bodenelement und das Deckelelement beispielsweise über die Seitenwände fest miteinander zu verbinden, sodass auch Einzelteile der Transportverpackung nicht verloren gehen können. Insbesondere ist eine Seitenwand klappbar mit dem Deckelelement oder dem Bodenelement verbunden. Zum Verschließen der öffenbaren Seitenwand kann diese ein Verschlusselement aufweisen, das sodann mit dem Deckelelement oder dem Bodenelement zusammen wirkt. Dies ist jedoch nicht unbedingt erforderlich wenn einer der Riemen außerhalb der klappbaren Seitenwand verläuft, sodass die klappbare Seitenwand durch den Riemen geschlossen gehalten wird.

Bei einer weiteren bevorzugten Ausführungsform weist das Deckelelement und das Bodenelement Schlitze auf, durch die die Riemen geführt sind. Dies hat den Vorteil, dass die Lage der Riemen klar definiert ist und insbesondere während des Transports ein Verrutschen der Riemen vermieden ist. Des Weiteren ist die Gefahr des Beschädigens der Riemen oder deren Verhaken in Sortieranlagen während des Transports verringert. Die Schlitze in dem Bodenelement und dem Deckelelement sind jeweils vorzugsweise paarweise einander gegenüberliegend angeordnet.

Bei einer bevorzugten Weiterbildung der Erfindung sind an Außenseiten des Bodenelements und/oder des Deckelelements Vertiefungen zur Aufnahme der Riemen angeordnet. Auch hierdurch ist ein Verrutschen der Riemen, sowie ein Beschädigen während des Transports vermieden. Insbesondere ist hierdurch vermieden, dass die Riemen beim Transport der Mehrwegverpackung auf einem Transportband, an Leitblechen des Transportbandes, an anderen Gepäckstücken etc. hängen bleiben.

Des Weiteren kann an einer Außenseite des Bodenelements und/oder des Deckelelements eine weitere insbesondere rechteckige Vertiefung zur Anordnung von Versandetiketten und der gleichen vorgesehen sein. Hierdurch ist insbesondere wenn der Transportbehälter auf Förderbändern transportiert wird ein Beschädigen oder Abreißen der Versandetiketten vermieden.

Da Transportbänder häufig Transportrollen aufweisen, besteht desweitern die Gefahr, dass sich eine Kante des Transportbehälters, insbesondere eine Kante des Boden- oder des Deckelelements zwischen zwei Transportrollen oder anderen Schlitzen verhakt. Dies kann zu Beschädigungen des Transportbehälters und/oder der Transporteinrichtung führen. In einer bevorzugten Weiterbildung der Erfindung sind an dem Bodenelement und/oder dem Deckelelement somit Verbreiterungselemente vorgesehen. Hierbei handelt es sich vorzugsweise um eine Aufkantung des Boden- oder des Deckelelements. In Seitenansicht ist das Boden- und/oder Deckelelement somit breiter ausgebildet, sodass es sich nicht in entsprechenden Schlitzen der Transporteinrichtung verhaken kann. Dennoch kann das Boden- und Deckelelement selbst eine geringe Dicke aufweisen. Hierdurch sind die Herstellkosten und das Gewicht reduziert.

Bei einer weiteren bevorzugten Weiterbildung der Erfindung sind an den Außenseiten des Bodenelements und des Deckelelements mit einander korrespondierende Ansätze und Vertiefungen vorgesehen. Diese greifen beim Stapeln der Transportverpackungen ineinander. Durch ein derartiges formschlüssiges Stapeln ist ein sicheres und definiertes Stapeln der Transportbehälter möglich.

Die erfindungsgemäße Mehrwegverpackung ist insbesondere für Reifen, Felgenräder und dergleichen geeignet. Selbstverständlich können durch eine derartige Mehrwegverpackung auch andere Güter verpackt und auf einfache Weise insbesondere über Paketversender verschickt werden.

Untersuchungen haben gezeigt, dass das Bodenelement und/oder das Deckelelement an Kanten beschädigt werden können. Dies würde dazu führen, dass ein erneutes Verwenden der Mehrwegverpackung nicht möglich ist oder diese zunächst repariert werden muss. Bei einer bevorzugten Weiterbildung der Erfindung ist eine Verstärkung des Randbereichs des Deckelelements und/oder des Bodenelements vorgesehen. Durch derartige Versteifungen des Randbereichs, insbesondere des gesamten Randbereichs, kann die Gefahr der Beschädigung verringert werden.

Die Versteifung ist insbesondere durch Falzen, d.h. durch ein doppellagiges Anordnen des Materials des Bodenelements im Randbereich realisiert. Bei einem Boden- oder Deckelelement aus Kunststoff oder Verbundwerkstoff kann nach dem Umfalten des Randbereichs ein Verschweißen des Materials erfolgen. Hierdurch kann ein sehr harter, stabiler Randbereich realisiert werden. Bei Boden- und Deckelelementen aus Pappe kann der Randbereich ebenfalls durch Umfalten und Verkleben realisiert werden. Des Weiteren ist es möglich, eine Versteifung im Randbereich durch das Vorsehen von Kantenelementen aus Hartkunststoff, Metall oder dergleichen zu realisieren.

Nachfolgend wird hierfür nun anhand einer bevorzugten Ausführungsform unter Bezugnahme auf die anliegenden Zeichnungen näher erläutert.

Es zeigen:
- Figur 1: eine schematische perspektivische Ansicht eines geschlossenen Transportbehälters,
- Figur 2: eine schematische perspektivische Ansicht eines offenen Transportbehälters,
- Figur 3: eine schematische perspektivische Teilansicht einer weiteren Ausführungsform und
- Figur 4: eine schematische Schnittansicht eines Randbereichs des Boden- oder Deckelelements.

Bei der in den Figuren dargestellten Ausführungsform ist ein im Wesentlichen ebenes Bodenelement 10 und ebenfalls ein im Wesentlichen ebenes Deckelelement 12 vorgesehen. Diese sind vorzugsweise identisch ausgebildet. Das Bodenelement 10 ist mit dem Deckelelement 12 über einen Faltenbalg 14 miteinander verbunden. Der Faltenbalg 14 bildet drei Seitenwände aus.

Hinsichtlich des Vorsehens des Faltenbalges 14 kann ein leerer Transportbehälter zusammen gedrückt werden, sodass sich das Transportmaß beispielsweise für einen Rücktransport erheblich verringert. Eine für den Transport stabile Verbindung zwischen dem Bodenelement 10 und dem Deckelelement 12 erfolgt durch zwei Riemen 16, die sich jeweils in der Mitte des Deckelelements 12 sowie des Bodenelements 10 kreuzen. Die Riemen können beispielsweise durch Klettverschlüsse, Haken und dergleichen miteinander verbunden werden. Zum Schutz der Riemen sind diese durch sowohl in dem Bodenelement 10 als auch in dem Deckelelement 12 vorgesehen Schlitze 18 geführt. An den drei durch die Seitenwand 14 verschlossenen Seiten des Transportbehälters sind jeweils zwei Schlitze 18 einander gegenüberliegend angeordnet.

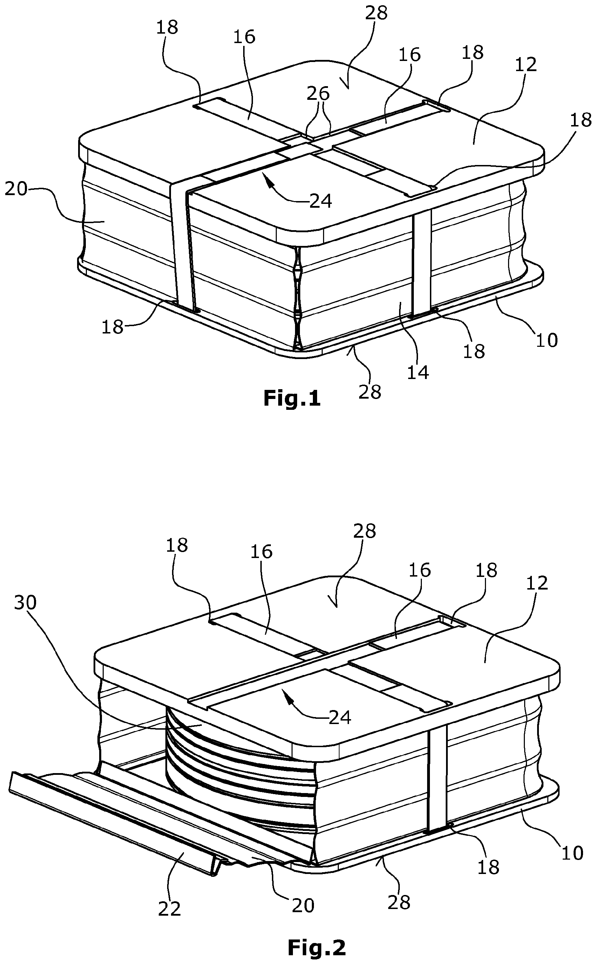

Eine vierte Seitenwand 20 ist klappbar mit dem Bodenelement 10 verbunden. Hierdurch ist auf einfache Weise ein Öffnen des Transportbehälters (Fig. 2) möglich. Im dargestellten Ausführungsbeispiel weist die klappbare Seitenwand 14 ein Klemmelement 22 auf, in das bei geschlossener Seitenwand 20 eine Kante des Deckelelements 12 ragt, sodass ein klemmendes Halten der Seitenwand 20 gewährleistet ist. Um ein Öffnen der klappbaren Seitenwand 20 während des Transports zu vermeiden, ist einer der Riemen außerhalb der klappbaren Seitenwand 20 angeordnet und hält diese geschlossen. Um ein einfaches Öffnen und Schließen zu ermöglichen, ist der im Bereich der klappbaren Seitenwand 20 verlaufende Riemen nicht durch einen Schlitz am Deckelelement geführt. Vorzugsweise ist der Riemen 16 in dem Bereich 24 über einen Klettverschluss miteinander verbunden.

Um Beschädigungen der Riemen zu vermeiden, sind diese vorzugsweise in rillenförmigen Vertiefungen 26 angeordnet. Die Vertiefungen 26 sind an den Außenseiten 28 des Bodenelements 10 bzw. des Deckelelements 12 vorgesehen.

Wie insbesondere aus Figur 2 ersichtlich ist, kann durch einfaches Öffnen der klappbaren Seitenwand 20 das Transportgut 30, in dem dargestellten Ausführungsbeispiel ein Reifen, aus dem Transportbehälter entnommen werden.

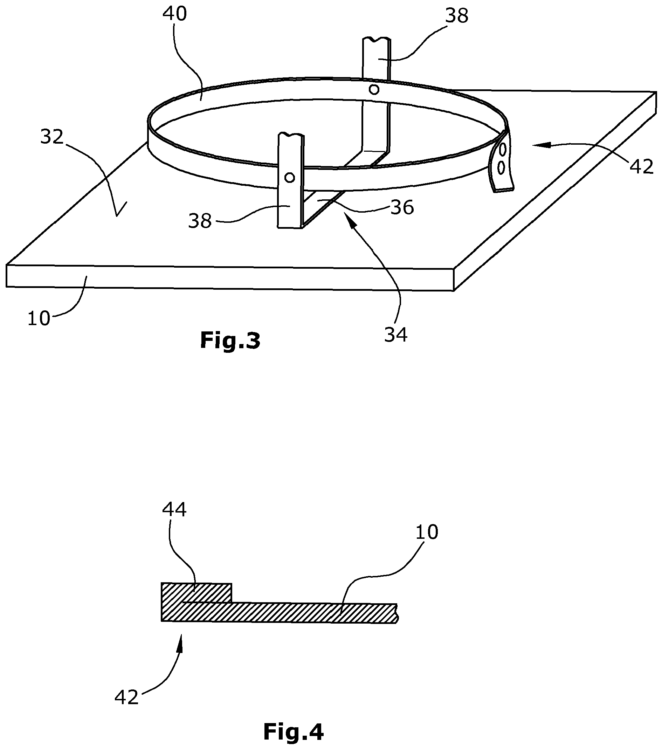

Bei einer weiteren in Fig. 3 dargestellten bevorzugten Ausführungsform der Erfindung sind ähnliche und identische Bauteile mit denselben Bezugszeichen gekennzeichnet.

Die Besonderheit dieser Ausführungsform besteht darin, dass die Befestigungselemente, d.h. die Riemen zur Befestigung des Transportguts wie eines Reifens, einer Felge oder eines Rades vollständig innerhalb der Mehrwegverpackung angeordnet sind.

In Fig. 3 ist zur Verdeutlichung lediglich das Bodenelement 10 dargestellt. An einer Innenseite 32 des Bodenelements ist ein erster Riemen 34 angeordnet. Dieser weist ein mit der Innenseite 32 des Bodenelements 10 verbundenes Verbindungsteil 36 und im dargestellten Ausführungsbeispiel 2 nach oben in Richtung des nicht dargestellten Deckelelements 12 weisendes Halteteil 38 auf. An einer nicht dargestellten Innenseite des Deckelelements 12 ist wiederum ein Innenteil 34 befestigt. Insbesondere handelt es sich hierbei um einen einzigen Riemen. Gegebenenfalls kann das Verbindungsteil 36 auch entfallen, so dass zwei gesonderte Halteteile 38 angeordnet sind. Mit den Halteteilen 38 ist ein in diesem Ausführungsbeispiel ringförmig ausgebildetes Riemenelement 40 fest verbunden. Das ringförmige Riemenelement 40 kann in einem Bereich 42 geöffnet werden. Hier ist eine Verbindung der beiden Enden durch Druckknöpfe, Laschen oder dergleichen vorgesehen. Selbstverständlich kann an der dem Bereich 42 gegenüberliegenden Seite ein weiteres Verbindungsteil 36 vorgesehen sein, das sowohl mit der Innenseite 32 des Bodenteils als auch mit der Innenseite des nicht dargestellten Deckelelements fest verbunden ist. Durch diese Anordnung der Riemen sind innenliegende Befestigungselemente für einen Reifen oder dergleichen realisiert.

Die in Fig. 3 dargestellte Ausführungsform weist ein Deckelement 12 auf, das dem Bodenelement 10 gegenüberliegend entsprechend den in den Fign. 1 und 2 dargestellten Ausführungsformen angeordnet ist. Ferner ist es bevorzugt, dass entsprechend der in den Fign. 1 und 2 dargestellten Ausführungsform als Faltenbälge ausgebildete Seitenwände 14 sowie eine aufklappbare Seitenwand 20 vorgesehen sind.

Zur weiteren Stabilisierung sind die in den Fign. 1 bis 3 dargestellten Ausführungsformen auch miteinander kombinierbar.

Fig. 4 zeigt einen Ausschnitt eines Randbereichs des Bodenelements 10 oder des Deckelelements 12 in Schnittansicht. Bspw. das Bodenelement 10 weist hierbei in einem Randbereich 42 einen doppellagigen Bereich zur Ausbildung eine Versteifung auf. Dieser doppellagige Bereich kann bspw. durch Falzen und Umknicken realisiert werden. In dem Anlagebereich 44 erfolgt ein Verbinden bspw. durch Verkleben oder Verschweißen.

## Patentansprüche

1. Mehrwegverpackung, insbesondere zum Transport von Reifen, Felgen oder Rädern, mit
einem Bodenelement (10) und einem Deckelelement (12), zwischen denen das Transportgut (30) angeordnet werden kann und
mindestens einem das Bodenelement (10) mit dem Deckelelement (12) verbindenden Befestigungselement (16) und
mindestens einer zwischen dem Bodenelement (10) und dem Deckelelement (12) angeordneten Seitenwand (14, 20), so dass eine das Transportgut insbesondere allseitig umschließende Verpackung ausgebildet ist,
**dadurch gekennzeichnet, dass**
die mindestens eine Seitenwand (14, 20) in ihrer Höhe veränderbar ist, insbesondere als Faltenbalg ausgebildet ist, wobei die Befestigungselemente (16) zum Fixieren des Transportguts zwischen dem Bodenelement (10) und dem Deckelelement (12) dienen.

2. Mehrwegverpackung nach Anspruch 1, **dadurch gekennzeichnet, dass** Randbereiche (42) des Bodenelements (10) und des Deckelelements (12) verstärkt sind.

3. Mehrwegverpackung nach Anspruch 2, **dadurch gekennzeichnet, dass** die Verstärkung durch Falzen des Bodenelements (10) und/oder des Deckelelements (12) im Randbereich (42) hergestellt ist.

4. Mehrwegverpackung nach einem der Ansprüche 1 bis 3, **dadurch gekennzeichnet, dass** das Bodenelement (10) und das Deckelelement (12) im Wesentlichen rechteckig, insbesondere im Wesentlichen quadratisch ausgebildet sind.

5. Mehrwegverpackung nach einem der Ansprüche 1 bis 4, **dadurch gekennzeichnet, dass** eine der Seitenwände (20) oder ein Teil einer Seitenwand zum Öffnen der Verpackung klappbar mit dem Bodenelement (10) oder dem Deckelelement (12) verbunden ist.

6. Mehrwegverpackung nach einem der Ansprüche 1 bis 5, **dadurch gekennzeichnet dass** das mindestens eine Befestigungselement als Riemen (16) ausgebildet ist.

7. Mehrwegverpackung nach Anspruch 6, **dadurch gekennzeichnet, dass** einer der Riemen (16) außerhalb der klappbaren Seitenwand (20) verläuft um diese geschlossen zu halten.

8. Mehrwegverpackung nach einem der Ansprüche 1 bis 7, **dadurch gekennzeichnet, dass** sämtliche Einzelteile der Verpackung fest miteinander verbunden sind, so dass diese bei den mehrfachen Transport-Umläufen nicht verloren gehen können.

9. Mehrwegverpackung nach Anspruch 7 oder 8, **dadurch gekennzeichnet, dass** das Bodenelement (10) und das Deckelelement (12) Schlitze (18) aufweisen durch die die Riemen (16) geführt sind.

10. Mehrwegverpackung nach Anspruch 9, **dadurch gekennzeichnet, dass** die Schlitze (18) jeweils paarweise gegenüberliegend angeordnet sind.

11. Mehrwegverpackung nach einem der Ansprüche 7 bis 10, **dadurch gekennzeichnet, dass** an einer Außenseite (28) des Bodenelements (10) und/oder des Deckelelements (12) Vertiefungen (26) zur Aufnahme der Riemen (16) vorgesehen sind.

12. Mehrwegverpackung nach einem der Ansprüche 1 bis 11, **dadurch gekennzeichnet, dass** an einer Außenseite (28) des Bodenelements (10) und/oder des Deckelelements (12) eine Vertiefung für Versandetiketten vorgesehen ist.

13. Mehrwegverpackung nach einem der Ansprüche 1 bis 12, **dadurch gekennzeichnet, dass** alle Befestigungselemente (16) ausschließlich mit den Innenseiten (32) des Bodenelements (10) und des Deckelelements (12) verbunden sind.

14. Mehrwegverpackung nach einem der Ansprüche 1 bis 13, **dadurch gekennzeichnet, dass** das Bodenelement (10) und/oder das Deckelelement (12) mit Verbreitungselementen verbunden ist.

15. Mehrwegverpackung nach einem der Ansprüche 1 bis 14, **dadurch gekennzeichnet, dass** die Außenseite (28) des Bodenelements (10) und des Deckelelements (12) miteinander korrespondierende Ansätze und Vertiefungen zum formschlüssigen Stapeln der Verpackung aufweist.

## Claims

1. A reusable package, in particular for transporting tires, wheel rims or wheels, comprising
a bottom element (10) and a top element (12) between which the goods (30) to be transported can be arranged, and
at least one fastening element (16) connecting said bottom element (10) with said top element (12), and
at least one side wall (14, 20) arranged between said bottom element (10) and said top element (12) such that a package enclosing said goods to be transported in particular on all sides is formed,
**characterized in that**
said at least one side wall (14, 20) is variable in its height, is in particular configured as a bellows, wherein said fastening elements (16) serve for fixing said goods to be transported between said bottom element (10) and said top element (12).

2. The reusable package according to claim 1, **characterized in that** edge areas (42) of the bottom element (10) and the top element (12) are reinforced.

3. The reusable package according to claim 2, **characterized in that** the reinforcement is created by bending over the bottom element (10) and/or the top element (12) in the edge area (42).

4. The reusable package according to any one of claims 1 to 3, **characterized in that** the bottom element (10) and the top element (12) are of an essentially rectangular, in particular essentially square configuration.

5. The reusable package according to any one of claims 1 to 4, **characterized in that** one of the side walls (20) or a portion of a side wall is foldably connected with the bottom element (10) or the top element (12) for opening the package.

6. The reusable package according to any one of claims 1 to 5, **characterized in that** the at least one fastening element is configured as a strap (16).

7. The reusable package according to claim 6, **characterized in that** one of the straps (16) extends outside the foldable side wall (20) in order to keep it closed.

8. The reusable package according to any one of claims 1 to 7, **characterized in that** all individual parts of the package are fixedly connected with each other such that they cannot get lost during the multiple transport cycles.

9. The reusable package according to claim 7 or 8, **characterized in that** the bottom element (10) and the top element (12) comprise slits (18) through which the straps (16) extend.

10. The reusable package according to claim 9, **characterized in that** the slits (18) are arranged in pairs opposite each other.

11. The reusable package according to any one of claims 7 to 10, **characterized in that** at an outer face (28) of the bottom element (10) and/or the top element (12) recesses (26) for accommodating the straps (16) are provided.

12. The reusable package according to any one of claims 1 to 11, **characterized in that** at an outer face (28) of the bottom element (10) and/or the top element (12) a recess for dispatch labels is provided.

13. The reusable package according to any one of claims 1 to 12, **characterized in that** all fastening elements (16) are exclusively connected with the inner faces (32) of the bottom element (10) and the top element (12).

14. The reusable package according to any one of claims 1 to 13, **characterized in that** the bottom element (10) and/or the top element (12) are connected with widening elements.

15. The reusable package according to any one of claims 1 to 14, **characterized in that** the outer face (28) of the bottom element (10) and the top element (12) comprise corresponding bosses and recesses for form-fit stacking of the package.

## Revendications

1. Emballage réutilisable, en particulier destiné au transport de pneus, jantes ou roues, avec
un élément de fond (10) et un élément de couvercle (12) entre lesquels l'article à transporter (30) peut être disposé, et
au moins un élément de fixation (16) raccordant l'élément de fond (10) à l'élément de couvercle (12), et
au moins une paroi latérale (14, 20) disposée entre l'élément de fond (10) et l'élément de couvercle (12) de telle sorte qu'un emballage entourant en particulier de tous côtés l'article à transporter est constitué,
**caractérisé en ce que**
la hauteur de la paroi latérale (14, 20) au moins au nombre de un peut être modifiée, la paroi latérale étant en particulier constituée en tant que soufflet, les éléments de fixation (16) servant à fixer l'article à transporter entre l'élément de fond (10) et l'élément de couvercle (12).

2. Emballage réutilisable selon la revendication 1, **caractérisé en ce que** des zones de bord (42) de l'élément de fond (10) et de l'élément de couvercle (12) sont renforcées.

3. Emballage réutilisable selon la revendication 2, **caractérisé en ce que** le renfort est réalisé par le pliage de l'élément de fond (10) et/ou de l'élément de couvercle (12) dans la zone de bord (42).

4. Emballage réutilisable selon l'une des revendications 1 à 3, **caractérisé en ce que** l'élément de fond (10) et l'élément de couvercle (12) sont constitués essentiellement de façon rectangulaire, en particulier essentiellement de façon carrée.

5. Emballage réutilisable selon l'une des revendications 1 à 4, **caractérisé en ce que** l'une des parois latérales (20) ou une partie d'une paroi latérale est, pour l'ouverture de l'emballage, raccordée de façon repliable à l'élément de fond (10) ou à l'élément de couvercle (12) .

6. Emballage réutilisable selon l'une des revendications 1 à 5, **caractérisé en ce que** l'élément de fixation au moins au nombre de un est constitué en tant que courroie (16) .

7. Emballage réutilisable selon la revendication 6, **caractérisé en ce qu'**une des courroies s'étend à l'extérieur de la paroi latérale (20) repliable pour maintenir cette dernière fermée.

8. Emballage réutilisable selon l'une des revendications 1 à 7, **caractérisé en ce que** toutes les parties individuelles de l'emballage sont raccordées fixement les unes aux autres de telle sorte qu'elles ne peuvent pas être perdues lors des multiples manutentions de transport.

9. Emballage réutilisable selon la revendication 7 ou 8, **caractérisé en ce que** l'élément de fond (10) et l'élément de couvercle (12) présentent des fentes (18) à travers lesquelles sont guidées les courroies (16).

10. Emballage réutilisable selon la revendication 9, **caractérisé en ce que** les fentes (18) sont disposées de façon opposée, respectivement par paires.

11. Emballage réutilisable selon l'une des revendications 7 à 10, **caractérisé en ce que** des creux (26) destinés à recevoir les courroies (16) sont prévus sur un côté extérieur (28) de l'élément de fond (10) et/ou de l'élément de couvercle (12).

12. Emballage réutilisable selon l'une des revendications 1 à 11, **caractérisé en ce qu'**un creux pour des étiquettes d'expédition est prévu sur un côté extérieur (28) de l'élément de fond (10) et/ou de l'élément de couvercle (12) .

13. Emballage réutilisable selon l'une des revendications 1 à 12, **caractérisé en ce que** tous les éléments de fixation (16) sont raccordés exclusivement aux côtés intérieurs (32) de l'élément de fond (10) et de l'élément de couvercle (12).

14. Emballage réutilisable selon l'une des revendications 1 à 13, **caractérisé en ce que** l'élément de fond (10) et/ou l'élément de couvercle (12) est raccordé à des éléments d'élargissement.

15. Emballage réutilisable selon l'une des revendications 1 à 14, **caractérisé en ce que** le côté extérieur (28) de l'élément de fond (10) et de l'élément de couvercle (12) présente des saillies et des creux, correspondants les uns avec les autres, pour l'empilement par liaison de forme de l'emballage.
